# FASCICULE DE BREVET EUROPEEN

(11) **EP 0 534 824 B1**
(45) Date de publication et mention de la délivrance du brevet: **14.06.1995**
(21) Numéro de dépôt: 92402550.5
(22) Date de dépôt: 17.09.1992
(51) Int. Cl.: G01M 3/20

(54) **Détecteur de fuite à gaz traceur**
Spürgaslecksuchdetektor
Tracer gas leak detector

(30) Priorité: 25.09.1991 FR 9111815
(43) Date de publication de la demande: 31.03.1993
(73) Titulaire: ALCATEL CIT, 75008 Paris (FR)
(72) Inventeur: Baret, Gilles, F-74000 Annecy (FR)
(74) Mandataire: Gosse, Michel

(56) Documents cités:
- EP-A- 0 268 777
- EP-A- 0 437 671
- DE-A- 2 924 258
- PATENT ABSTRACTS OF JAPAN vol. 7, no. 15 (P-169)(1160) 21 janvier 1983 & JP-A-57169647

## Description

Les détecteurs de fuite à l'hélium ont beaucoup progressé, afin d'une part, que le système d'analyse lui-même soit protégé des contaminants issus du système de pompage, mais d'autre part, que les pièces à tester soient non soumises aux vapeurs de fluides utilisés dans les pompes.

Les détecteurs des premiers temps utilisaient des pompes secondaires à diffusion d'huile, et leur cellule d'analyse était protégée à l'aide de piège cryogénique condensant les vapeurs d'huile de la pompe à diffusion. Mais les pièces à tester n'étaient pas protégées des vapeurs d'huile que rétrodiffusent les pompes primaires mécaniques à joint d'huile servant à prévider les pièces jusqu'à des pressions de l'ordre de 10⁻² mbar.

La génération suivante de détecteur de fuite comme dans EP-A-268777 a vu remplacer la pompe secondaire à diffusion d'huile par une pompe de type mécanique (Turbomoléculaire à ailettes ou du type Holveck, etc) qui par constitution ne contient pas de lubrifiant (pompe à palier magnétique), ou si peu (pompe à roulement à bille), qu'elle ne contamine pas la cellule d'analyse et la pièce à tester. Cependant la pièce à tester est encore soumise à l'action des vapeurs de lubrifiant de la pompe primaire mécanique à joint d'huile lors de la phase de prévidage, bien qu'en utilisant des pompes secondaires mécaniques pouvant fonctionner à des pressions de l'ordre du mbar, la phase de prévidage pendant laquelle la pièce à tester et la pompe primaire de prévidage sont en relation directe, se produise uniquement en écoulement visqueux ce qui limite la rétrodiffusion de vapeurs d'huile vers la pièce à tester, mais cela reste non satisfaisant pour les applications ultra propres où la pièce à tester peut souffrir de la moindre trace d'hydrocarbure (constituant principal des lubrifiants des pompes primaires mécaniques à joint d'huile). D'autre part, dans tous les cas d'utilisation de pompes primaires à joint d'huile, l'environnement extérieur reçoit les vapeurs ou brouillards d'huile, notamment lors du fonctionnement à haute pression. Ceci peut être éliminé par le raccordement du refoulement de la pompe à un système d'aspiration, mais cela induit des raccordements de tuyauteries supplémentaires du détecteur vers le système de ventilation.
Un autre inconvénient généré par l'utilisation de pompes primaires à joint d'huile dans les détecteurs de fuite, provient du fait que certaines précautions doivent être prises lors du transport et du fonctionnement de l'appareil.
- Transport et fonctionnement en position horizontale
- Vidange de la pompe lors du transport en avion non pressurisé ou dans des conditions de vibrations très importantes.

Pour éviter les inconvénients liés au fait que les pompes primaires utilisent un fluide pour leur lubrification et pour assurer leur étanchéité, on peut remplacer ces pompes par des pompes dites sèches :
- Pompe à membrane
- Pompe à palettes sèches
- Pompe à piston rotatif
- Pompe à piston alternatif
- Pompe péristaltique
- Pompe à vis
- etc....

cependant les pompes sèches présentent plusieurs inconvénients :
- leur pression limite à l'aspiration est très élevée par rapport à la pression de refoulement de la pompe secondaire qui est plus basse.
- leur taux de compression est relativement faible pour les gaz légers tels que l'hélium ce qui augmente le temps de récupération du détecteur lorsque celui-ci a absorbé une certaine quantité d'hélium, et peut même rendre inutilisable l'appareil lorsque l'on désire détecter des faibles taux de fuite.
- Elles ont une très faible vitesse de pompage aux basses pressions d'aspiration inférieures à 10 mbar.

La présente invention a pour but de proposer un détecteur de fuite utilisant une pompe sèche comme pompe primaire en palliant les inconvénients ci-dessus et assurant automatiquement une bonne vitesse de pompage de l'enceinte à tester aux faibles pressions inférieures à 10 mbar.

L'invention a ainsi pour objet un détecteur de fuite à gaz traceur comportant une cellule d'analyse, une pompe primaire dont l'aspiration est reliée à un orifice d'entrée du détecteur par une première conduite munie d'une première vanne, et un groupe de pompage secondaire ayant son entrée reliée à ladite cellule d'analyse et son refoulement à l'aspiration de la pompe primaire, caractérisé en ce que la pompe primaire est une pompe dite sèche, ledit groupe de pompage secondaire comportant deux pompes secondaires de type mécanique séparées l'une de l'autre par une seconde vanne, la pompe secondaire la plus proche de ladite pompe primaire sèche, appelée seconde pompe secondaire, comportant à son refoulement un étage joint dynamique, en ce qu'une seconde conduite relie l'aspiration de ladite seconde pompe secondaire, en aval de ladite seconde vanne, à ladite première conduite, une troisième vanne étant disposée sur ladite première conduite, entre le refoulement de ladite seconde pompe secondaire et la jonction de la seconde conduite avec la première conduite, ladite troisième vanne étant commandée par un capteur de pression placé à l'aspiration de ladite seconde pompe secondaire.

Selon une autre caractéristique, afin de diminuer considérablement le temps de récupération du détecteur après que celui-ci ait absorbé une certaine quantité d'hélium, le détecteur comprend en amont de la pompe primaire sèche un orifice d'entrée permettant l'injection d'un gaz distinct du gaz traceur.

L'invention va maintenant être décrite en se référant au dessin annexé dans lequel :
- La figure 1 représente un détecteur de fuite selon l'invention :
- la figure 2 montre schématiquement un exemple de pompe secondaire mécanique comportant à son refoulement un étage joint dynamique.

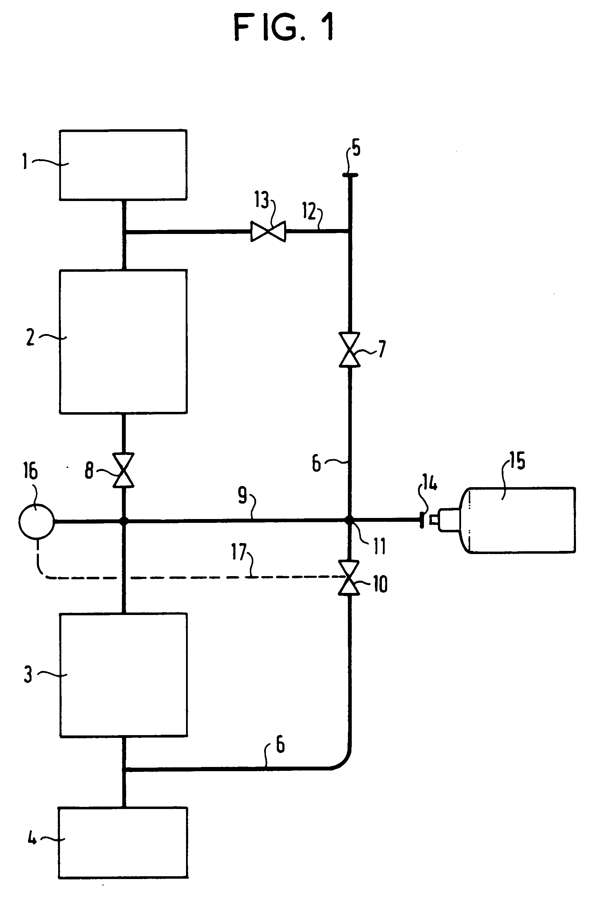

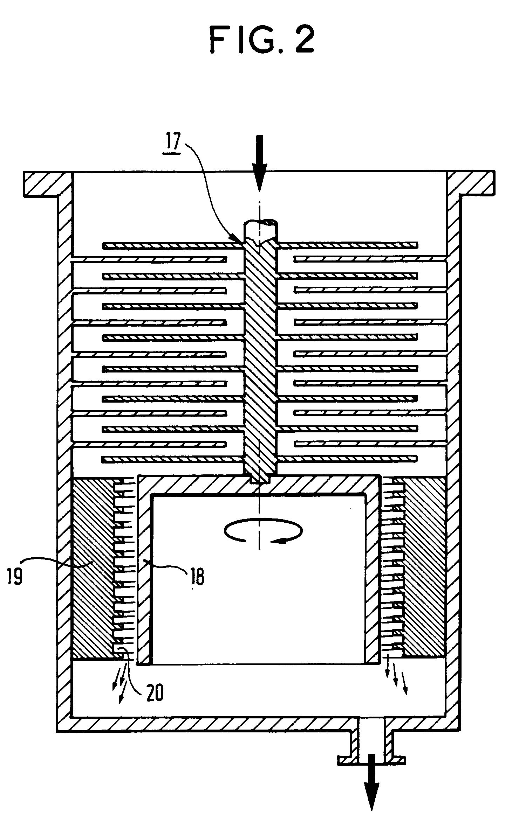

Le détecteur de la figure 1 comporte un analyseur de gaz 1, un groupe de pompage secondaire comportant une première pompe secondaire mécanique 2 et une seconde pompe secondaire mécanique 3. La seconde pompe secondaire mécanique 3 est une pompe secondaire comportant à son refoulement un étage joint dynamique comme le montre la figure 2. Le refoulement de la seconde pompe secondaire 3 est relié à l'aspiration d'une pompe primaire sèche 4 telle que l'une de celles énumérées plus haut. Le détecteur comporte un orifice d'entrée 5, destiné à être raccordé à une enceinte à tester, relié par une première conduite 6 munie d'une première vanne 7 à l'aspiration de la pompe primaire 4. La première pompe secondaire 2 et la seconde pompe secondaire 3 sont séparées par une seconde vanne 8. Une seconde conduite 9 relie l'aspiration de la seconde pompe secondaire 3, en aval de la seconde vanne 8, à la première conduite 6. Une troisième vanne 10 est disposée sur la première conduite 6 entre l'aspiration de la pompe primaire 4 et la jonction 11 de la seconde conduite 9 avec la première conduite 6. Une troisième conduite 12, munie d'une quatrième vanne 13, relie encore l'entrée 5 du détecteur à l'analyseur de gaz 1.

Enfin, le détecteur comprend, en amont de la pompe primaire 4, un orifice 14 relié à un récipient 15 de gaz comprimé. Ce récipient est équipé d'un système de détente permettant de délivrer un faible débit de gaz de l'ordre de 10⁻¹ à 10⁻² cm³/s de gaz détendu.

Une sonde de pression 16, placée à l'aspiration de la seconde pompe secondaire 3 commande l'ouverture et la fermeture de la troisième vanne 10.

Comme il a été dit plus haut, la seconde pompe secondaire 3 est une pompe secondaire comportant à son refoulement un étage joint dynamique. La pompe peut être soit turbomoléculaire à ailettes soit du type holweck.

La figure 2 montre une pompe turbomoléculaire à ailettes comportant au refoulement un joint dynamique : le rotor à ailettes 17 se prolonge par un rotor cylindrique lisse 18 qui tourne en face d'une partie statorique 19 comportant un pas de vis 20.

Ainsi, le détecteur de la figure 1, grâce à la pompe secondaire 3 comportant au refoulement un joint dynamique 18,20 peut refouler à une pression relativement élevée, compatible avec la pression limite élevée de la pompe primaire sèche 4.

Le fonctionnement est le suivant : le prévidage de la pièce à tester, raccordée à l'entrée 5 du détecteur, se fait en deux temps : Depuis la pression atmosphérique jusqu'à environ 20 mbar l'évacuation est faite par la seule pompe primaire sèche 4 à travers la première vanne 7 et la troisième vanne 10, les vannes 13 et 8 étant fermées; à partir de 20 mbar et au-dessous la vanne 10, commandée par le capteur de pression 16, se ferme et la pièce est vidée par la seconde pompe secondaire 3 et la pompe primaire 4. Ainsi, aux faibles pressions on bénéficie du débit engendré par la pompe secondaire 3.

L'épreuve de détection de fuite est ensuite effectué soit en contre-courant, les vannes 13 et 10 étant fermées et les vannes 7 et 8 étant ouvertes, soit en direct en ouvrant les vannes 13 et 8 et les vannes 7 et 10 étant fermées.

La commande de la troisième vanne 10 est figurée par la ligne pointillée 17.

Le récipient de gaz 15 permet de diminuer considérablement le temps de récupération du détecteur après qu'il ait absorbé une certaine quantité d'hélium.

A cet effet le gaz est injecté soit en permanence soit après qu'un test ait été conduit.

Le gaz injecté est, bien entendu, un gaz neutre exempt d'hélium. On peut utiliser par exemple de l'azote, du gaz carbonique, de l'argon ou tout autre gaz dont la teneur en hélium est inférieure au PPM.

L'injection du gaz, dans la figure 1 est faite à l'aspiration de la seconde pompe secondaire 3, cependant cette injection peut être réalisée ailleurs, par exemple en tout point intermédiaire de la première pompe secondaire 2 à condition cependant que le système d'injection soit muni d'une vanne afin de pouvoir couper l'injection pendant la phase de prévidage pour éviter de faire remonter la pression de la pompe secondaire 2 et ainsi de nuire au fonctionnement de l'analyseur 1.

Un avantage supplémentaire de l'association des pompes 3 et 4 pendant une partie du temps du prévidage de l'enceinte reliée à l'entrée 1 est que la quatrième vanne 13 peut avoir une conductance assez élevée, car, en test, en méthode directe, l'ouverture de cette vanne 13 peut être effectuée à une pression beaucoup plus basse que dans le cas où le prévidage ne s'effectue que par la pompe primaire 4 puisque cette association permet de descendre à une pression bien inférieure. La conséquence du fait que la vanne 13 peut avoir une conductance élevée est que le temps de réponse de l'appareil est plus court.

## Revendications

1. Détecteur de fuite à gaz traceur comportant une cellule d'analyse (1), une pompe primaire (4) dont l'aspiration est reliée à un orifice d'entrée (5) du détecteur par une première conduite (6) munie d'une première vanne (7), et un groupe de pompage secondaire ayant son entrée reliée à ladite cellule d'analyse (1) et son refoulement à l'aspiration de la pompe primaire (4), caractérisé en ce que la pompe primaire (4) est une pompe dite sèche, ledit groupe de pompage secondaire comportant deux pompes secondaires de type mécanique (2, 3) séparées l'une de l'autre par une seconde vanne (8), la pompe secondaire (3) la plus proche de ladite pompe primaire sèche (4), appelée seconde pompe secondaire (3), comportant à son refoulement un étage joint dynamique (18, 20), en ce qu'une seconde conduite (9) relie l'aspiration de ladite seconde pompe secondaire (3), en aval de ladite seconde vanne (8), à ladite première conduite (6), une troisième vanne (10) étant disposée sur ladite première conduite (6), entre le refoulement de ladite seconde pompe secondaire (3) et la jonction (11) de la seconde conduite (9) avec la première conduite (6), ladite troisième vanne (10) étant commandée par un capteur de pression (16) placé à l'aspiration de ladite seconde pompe secondaire (3).

2. Détecteur de fuite selon la revendication 1, caractérisé en ce qu'il comprend, en amont de ladite pompe primaire sèche (4), un orifice d'entrée (14) permettant l'injection d'un gaz distinct du gaz traceur.

3. Détecteur de fuite selon la revendication 2, caractérisé en ce que ledit orifice d'entrée est relié à un récipient de gaz (15).

4. Détecteur de fuite selon l'une des revendications précédentes, caractérisé en ce qu'une troisième conduite (12), munie d'une quatrième vanne (13), relie ladite entrée (5) dudit détecteur à l'analyseur de gaz (1).

## Claims

1. A tracer-gas leak detector including an analysis unit (1), a primary pump (4) whose inlet is connected to an inlet orifice (5) of the detector via a first pipe (6) equipped with a first valve (7), and a secondary pumping set having its inlet connected to said analysis unit (1) and its outlet connected to the inlet of the primary pump (4), said detector being characterized in that the primary pump (4) is a "dry" pump, said secondary pumping set including two secondary pumps of the mechanical type (2, 3) separated from each other by a second valve (8), the secondary pump (3) that is closer to said dry primary pump (4) being referred to as the "second secondary pump" (3) and including a dynamic seal stage (18, 20) at its outlet, and in that a second pipe (9) connects the inlet of said second secondary pump (3) to said first pipe (6) downstream from said second valve (8), a third valve (10) being disposed on said first pipe (6) between the outlet of said second secondary pump (3) and the junction (11) where the second pipe (9) meets the first pipe (6), said third valve (10) being controlled by a pressure sensor (16) placed at the inlet of said second secondary pump (3).

2. A leak detector according to claim 1, characterized in that, upstream from said dry primary pump (4), it includes an inlet orifice (14) enabling a gas distinct from the tracer gas to be injected.

3. A leak detector according to claim 2, characterized in that said inlet orifice is connected to a gas container (15).

4. A leak detector according to any preceding claim, characterized in that a third pipe (12), equipped with a fourth valve (13), connects said inlet (5) of said detector to the gas analyzer (1).

## Patentansprüche

1. Spürgas-Leckdetektor mit einer Analysezelle (1), einer Primärpumpe (4), deren Saugseite mit einer Einlaßöffnung (5) des Detektors über eine erste Leitung (6) verbunden ist, in der sich ein erstes Ventil (7) befindet, und mit einer Sekundärpumpgruppe, deren Eingang an die Analysezelle (1) und deren Auslaß an die Saugseite der Primärpumpe (4) angeschlossen ist, dadurch gekennzeichnet, daß die Primärpumpe (4) eine trockenlaufende Pumpe ist, daß die Sekundärpumpgruppe zwei Sekundärpumpen mechanischer Art (2, 3) enthält, die durch ein zweites Ventil (8) voneinander getrennt sind, daß die der trockenlaufenden Primärpumpe (4) benachbarte Sekundärpumpe (3), zweite Sekundärpumpe genannt, an ihrem Auslaß eine dynamische Dichtstufe (18, 20) enthält, daß eine zweite Leitung (9) die Saugseite der zweiten Sekundärpumpe (3) hinter dem zweiten Ventil (8) mit der ersten Leitung (6) verbindet, wobei ein drittes Ventil (10) in der ersten Leistung (6) zwischen dem Auslaß der zweiten Sekundärpumpe (3) und der Verbindung (11) zwischen der zweiten Leitung (9) und der ersten Leitung (6) liegt, und daß das dritte Ventil (10) von einer Druckmeßsonde (16) gesteuert wird, die an der Saugseite der zweiten Sekundärpumpe (3) liegt.

2. Leckdetektor nach Anspruch 1, dadurch gekennzeichnet, daß er vor der trockenlaufenden Primärpumpe (4) einen Einlaßanschluß (14) aufweist, der die Einspeisung eines Gases erlaubt, das sich vom Spürgas unterscheidet.

3. Leckdetektor nach Anspruch 2, dadurch gekennzeichnet, daß der Einlaßanschluß an einen Gasbehälter (15) angeschlossen ist.

4. Leckdetektor nach einem der vorhergehenden Ansprüche, dadurch gekennzeichnet, daß eine dritte Leitung (12) mit einem vierten Ventil (13) den Einlaß (5) des Detektors mit der Gasanalysezelle (1) verbindet.
